# EUROPEAN PATENT APPLICATION

(11) **EP 4 108 145 A1**
(43) Date of publication of application: **28.12.2022**
(21) Application number: 22179290.6
(22) Date of filing: 15.06.2022
(51) Int. Cl.: A47J 41/00

(54) **BEVERAGE CONTAINER**

(30) Priority: 23.06.2021 JP 2021103831
(71) Applicant: Thermos K.K., Tsubame-shi Niigata (JP); Thermos L.L.C., Schaumburg, IL 60173 (US)
(72) Inventor: KOGURE, Tsuyoshi, Tsubame-shi, Niigata-ken (JP)
(74) Representative: Barker Brettell LLP

(57) **Abstract**

A beverage container 1 for internally housing a beverage, the beverage container 1 comprising: a container main body 2 having an open upper portion; a shoulder member 8 fitted to a neck portion 2c having a narrower diameter than a body portion 2b, on an upper portion side of the container main body 2; and a shoulder seal gasket 9B interposed between the container main body 2 and the shoulder member 8, wherein the shoulder seal gasket 9B is at least positioned between a shoulder portion 2d which gradually narrows in diameter from the body portion 2b of the container main body towards the neck portion 2c, and a surface of the shoulder member 8 facing the shoulder portion 2d.

## Description

### [Technical Field]

The present invention relates to a beverage container.

### [Background Art]

A conventional beverage container comprises: a shoulder member fitted to a neck portion of a container main body having an opening upper portion; and a cap unit detachably fitted to the shoulder member (e.g., see Patent Document 1 indicated below).

The beverage container described in Patent Document 1 indicated below comprises a mouth seal gasket for forming a seal between the container main body and the shoulder member in a state of covering the neck portion of the container main body. This prevents a beverage inside the container main body from leaking out from a gap between the neck portion of the container main body and the shoulder member.

### [Prior Art Documents]

[Patent Document 1] JP 2014-31192 A

### [Summary of the Invention]

### [Problems to be Solved by the Invention]

With the beverage container described in Patent Document 1 mentioned above, however, water and the like penetrates from an outer circumferential surface side into a gap between the container main body and the shoulder member during washing, etc. In this case, the shoulder member which is fitted to the neck portion of the container main body cannot be removed, so not only is this unhygienic due to water, etc. remaining in the gap, there is also a possibility of rust forming on the container main body.

The present invention has been proposed in light of the situation in the prior art, and the objective thereof lies in providing a beverage container capable of keeping an area between a shoulder portion of a container main body and a shoulder member hygienic.

### [Statements of Invention]

In order to achieve the objective above, the present invention provides the following means.
[1] A beverage container for internally housing a beverage, the beverage container comprising:
   a container main body having an open upper portion;
   a shoulder member fitted to a neck portion having a narrower diameter than a body portion, on an upper portion side of the container main body; and
   a shoulder seal gasket interposed between the container main body and the shoulder member, characterized in that the shoulder seal gasket is at least positioned between a shoulder portion which gradually narrows in diameter from the body portion of the container main body towards the neck portion, and a surface of the shoulder member facing the shoulder portion.
[2] A beverage container as described in [1] above, characterized in that the shoulder member comprises a mating recess into which the shoulder seal gasket is fitted on the surface facing the shoulder portion.
[3] A beverage container as described in [1] or [2] above, characterized in that the shoulder seal gasket comprises an elastic rib portion protruding around the whole circumference from a surface facing the shoulder portion and/or a surface facing the shoulder member, and
   in a state in which the shoulder seal gasket is interposed between the shoulder portion and the shoulder member, the shoulder seal gasket is in a state of tight contact with a surface abutted by the elastic rib portion, while the elastic rib portion elastically deforms.
[4] A beverage container as described in any one of [1] to [3] above, characterized in that a mouth seal gasket for forming a seal between the container main body and the shoulder member is provided in a state of covering an upper end portion of the neck portion.
[5] A beverage container as described in [4] above, characterized in that the mouth seal gasket and the shoulder seal gasket are formed as a single piece.
[6] A beverage container as described in any one of [1] to [5] above, characterized by comprising a cap unit for closing off an upper opening portion of the container main body.
[7] A beverage container as described in any one of [1] to [6] above, characterized in that the container main body has a vacuum-insulated structure.

### [Advantage of the Invention]

The present invention thus makes it possible to provide a beverage unit capable of keeping an area between a shoulder portion of a container main body and a shoulder member hygienic.

### [Brief Description of the Drawings]

[Fig. 1] is an oblique view showing an external view of a container having a cap according to an embodiment of the invention.
[Fig. 2] is a view in cross section showing a closed state of a cap unit of the container having a cap.
[Fig. 3] is a view in cross section showing an open state of the cap unit of the container having a cap.
[Fig. 4] is an oblique view where a cap main body is seen from a lower side.
[Fig. 5] is an exploded oblique view showing the configuration of the cap unit.
[Fig. 6] is an exploded view in cross section showing the configuration of the cap unit.
[Fig. 7] is an oblique view showing the configuration of the cap main body of the cap unit.
[Fig. 8] is an exploded oblique view showing the configuration of a lid element of the cap unit.
[Fig. 9] is a side view showing the configuration of an inner plug of the cap unit.
[Fig. 10] is a main-part view in cross section showing a state in which a slide shaft on the inner plug side is attached by means of screwing to a first holding member on the lid element side.
[Fig. 11] is a main-part oblique view showing a latched state of a latching portion and a latched portion of a stopper mechanism of the cap unit.
[Fig. 12] is a main-part view in cross section showing a state in which a plug element of the stopper mechanism of the cap unit has moved away from a water seal gasket.
[Fig. 13] shows the configuration of a shoulder seal gasket, where (A) is a plan view thereof, (B) is a view in cross section along the line segment A-A shown in (A), and (C) is an enlargement in cross section of the enclosed portion B shown in (B).
[Fig. 14] shows a different configuration of the shoulder seal gasket, where (A) is a plan view thereof, (B) is a view in cross section along the line segment A-A shown in (A), and (C) is an enlargement in cross section of the enclosed portion B shown in (B).
[Fig. 15] is a view in cross section showing a configuration in which a mouth seal gasket and the shoulder seal gasket are formed as a single piece.

### [Mode for Implementing the Invention]

An embodiment of the present invention will be described in detail below with reference to the drawings.

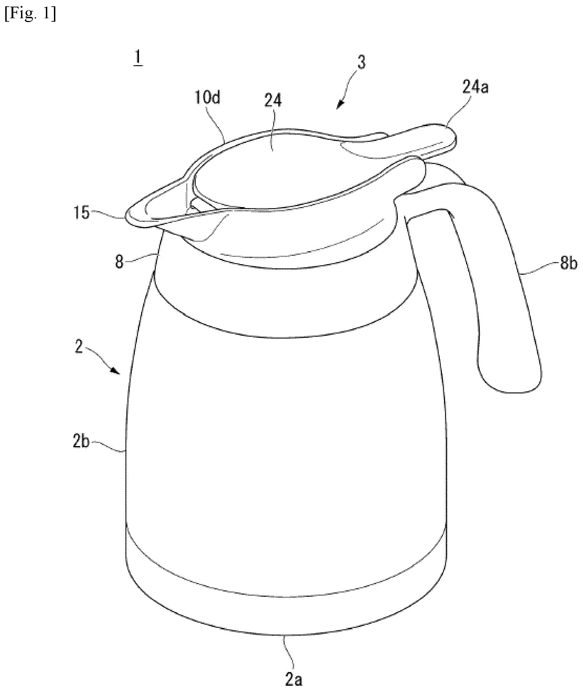

A container 1 having a cap shown in fig. 1-15, will be described by way of example as an embodiment of the present invention.

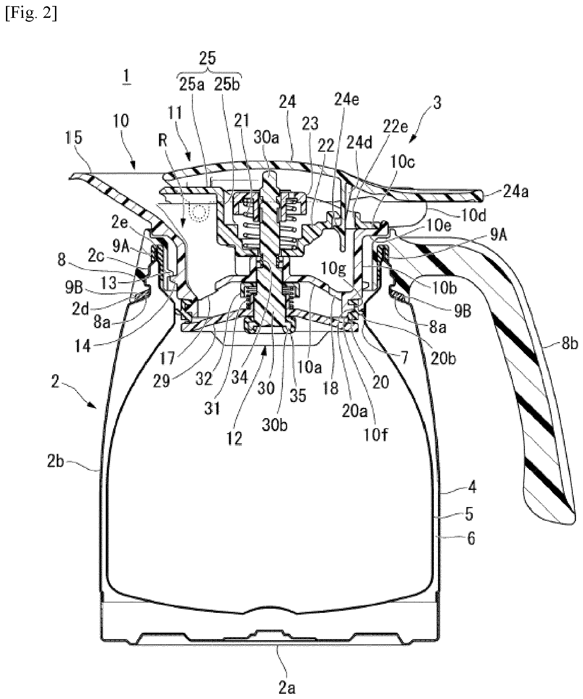

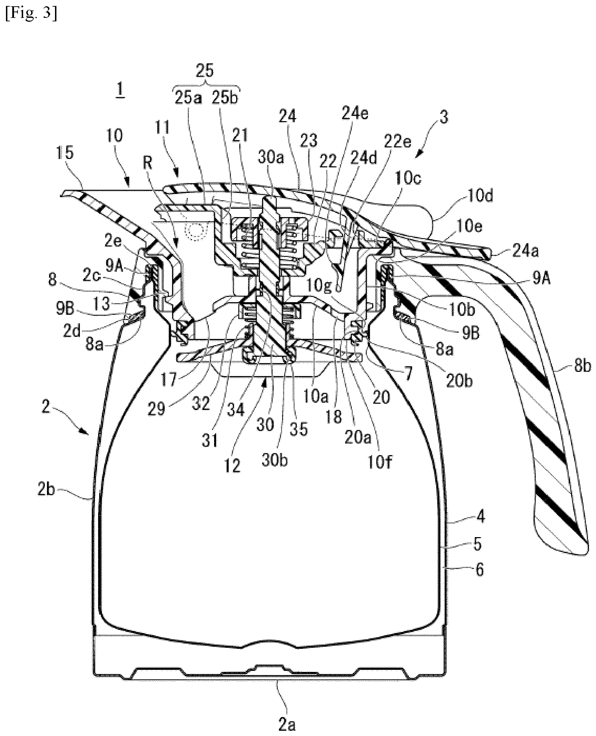

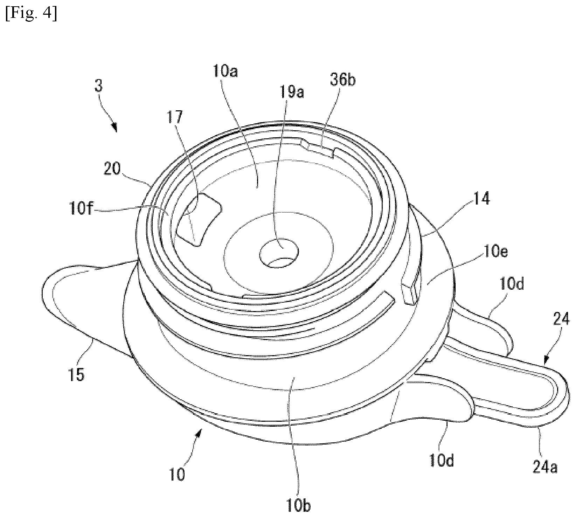

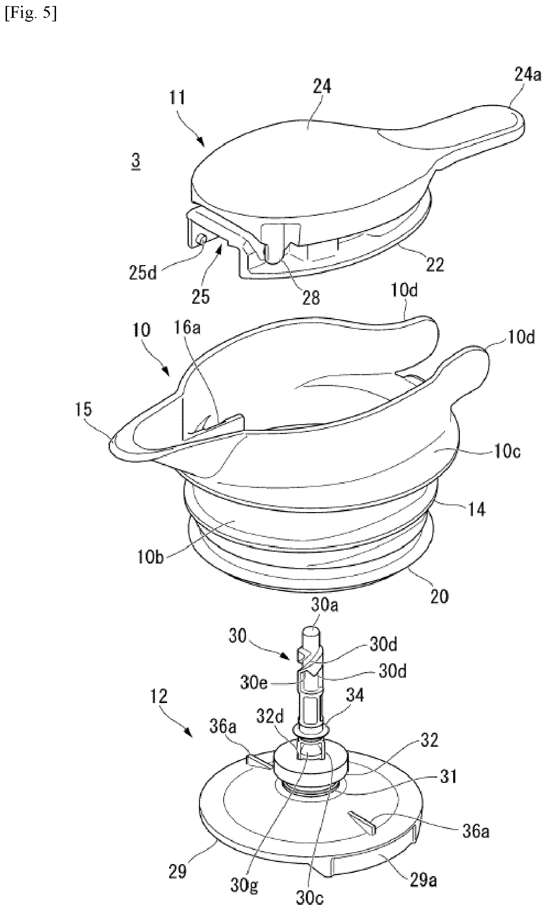

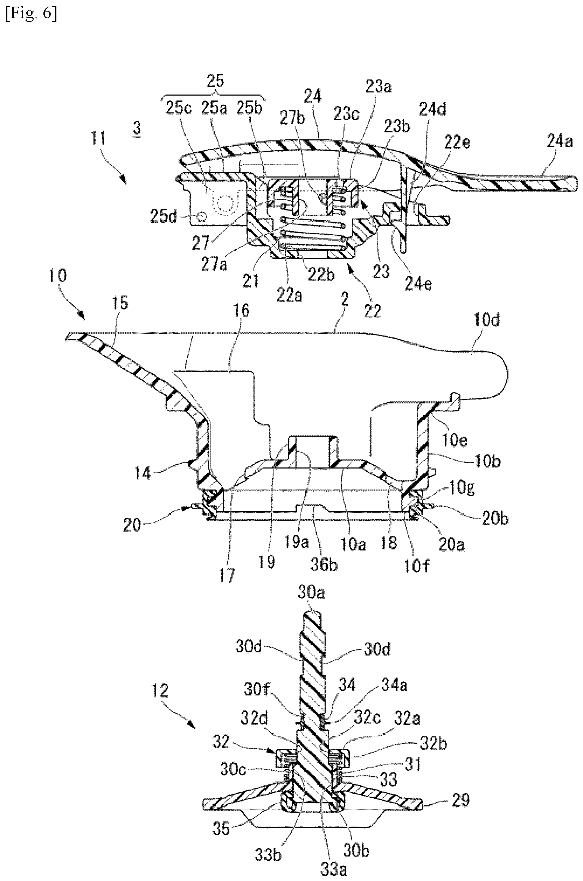

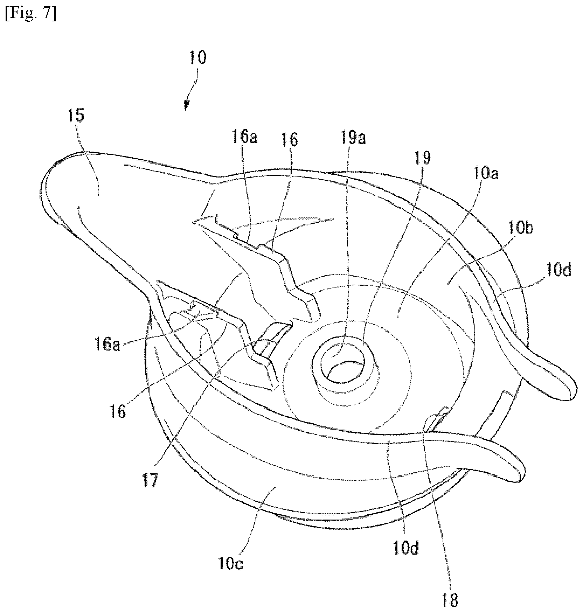

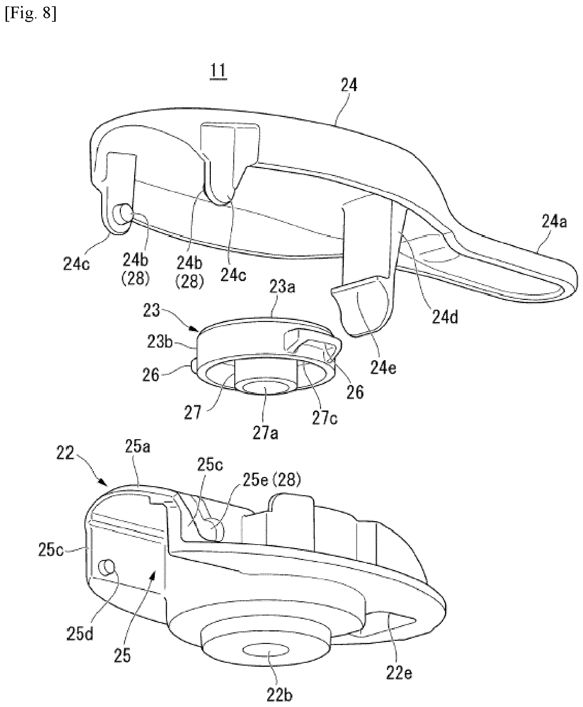

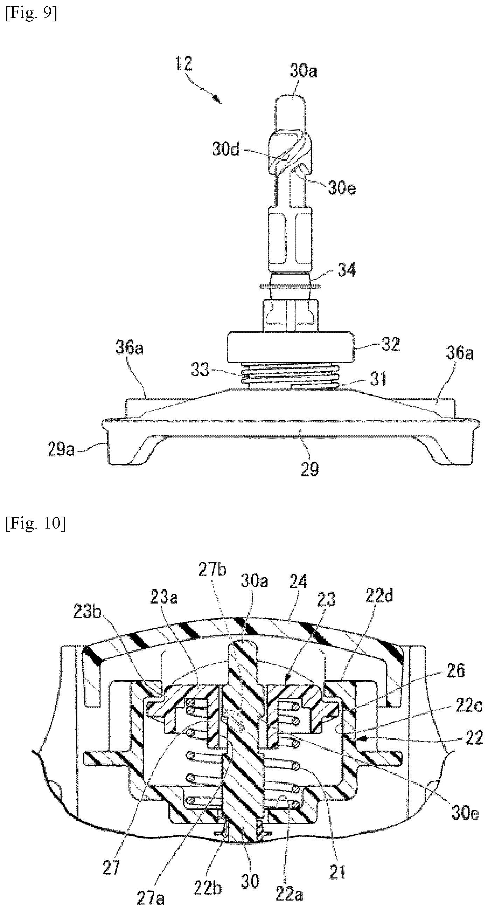

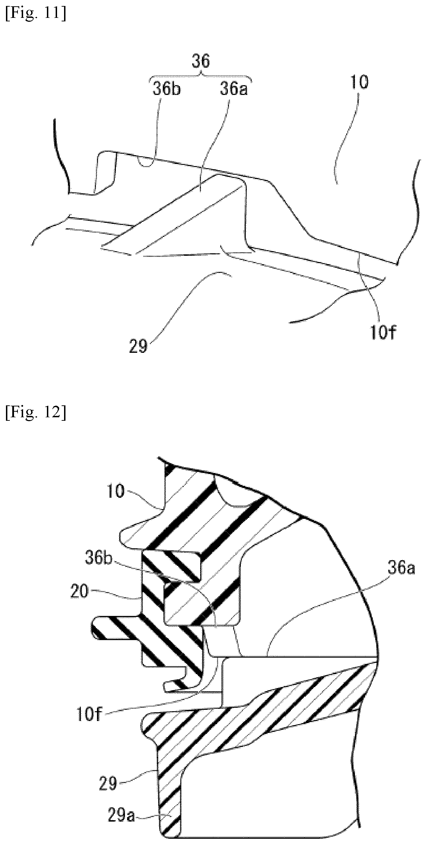

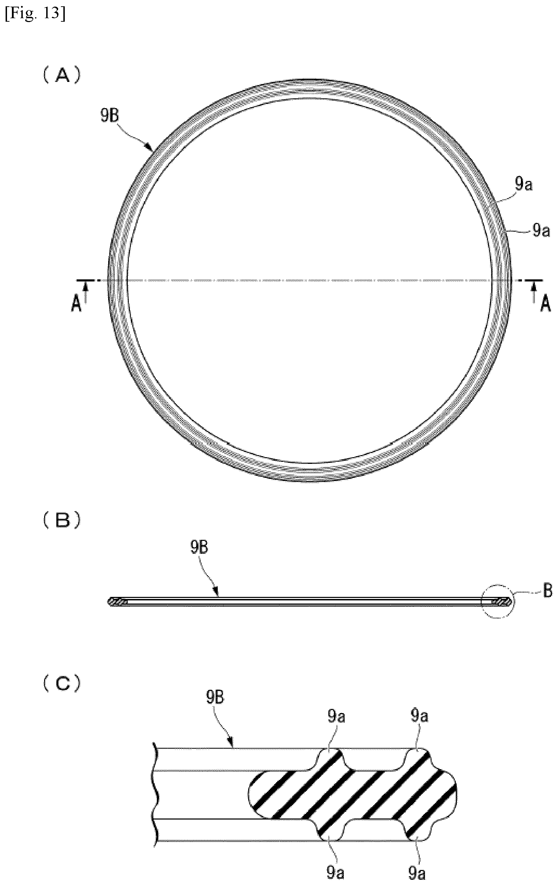

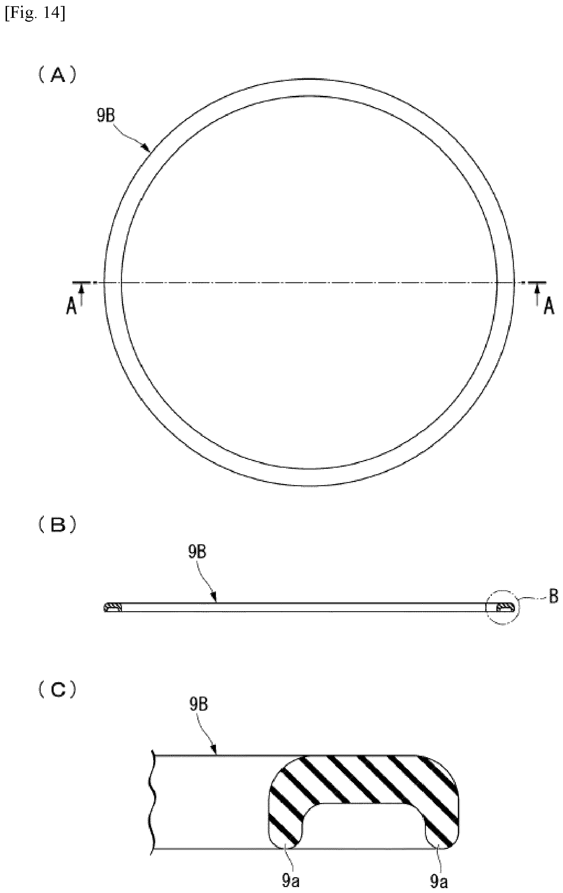

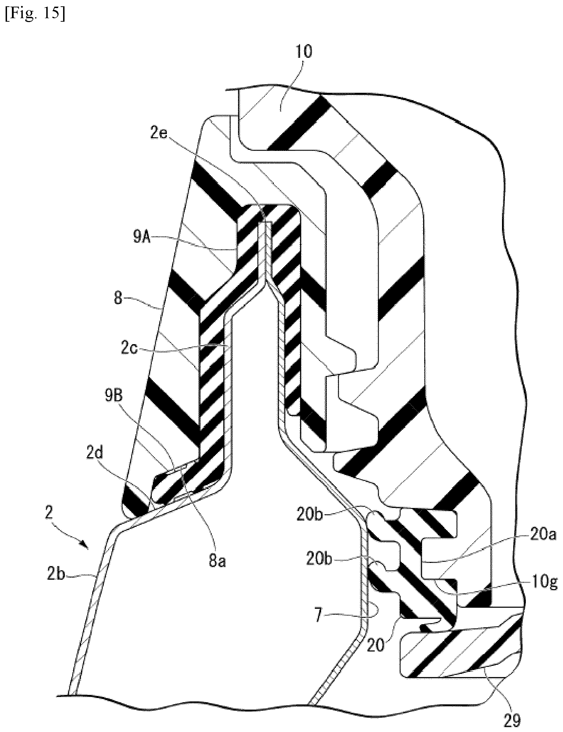

It should be noted that fig. 1 is an oblique view showing an external view of the container 1 having a cap. Fig. 2 is a view in cross section showing a closed state of a cap unit 3 of the container 1 having a cap. Fig. 3 is a view in cross section showing an open state of the cap unit 3 of the container 1 having a cap. Fig. 4 is an oblique view where a cap main body 10 is seen from a lower side. Fig. 5 is an exploded oblique view showing the configuration of the cap unit 3. Fig. 6 is an exploded view in cross section showing the configuration of the cap unit 3. Fig. 7 is an oblique view showing the configuration of the cap main body 10 of the cap unit 3. Fig. 8 is an exploded oblique view showing the configuration of a lid element 11 of the cap unit 3. Fig. 9 is a side view showing the configuration of an inner plug 12 of the cap unit 3. Fig. 10 is a main-part view in cross section showing a state in which a slide shaft 30 on the inner plug 12 side is attached by means of screwing to a first holding member 23 on the lid element 11 side. Fig. 11 is a main-part oblique view showing a latched state of a latching portion 36a and a latched portion 36b of a stopper mechanism 36 of the cap unit 3. Fig. 12 is a main-part view in cross section showing a state in which a plug element 29 of the stopper mechanism 36 of the cap unit 3 has moved away from a water seal gasket 20. Fig. 13 shows the configuration of a shoulder seal gasket 9B, where (A) is a plan view thereof, (B) is a view in cross section along the line segment A-A shown in (A), and (C) is an enlargement in cross section of the enclosed portion B shown in (B). Fig. 14 shows a different configuration of the shoulder seal gasket 9B, where (A) is a plan view thereof, (B) is a view in cross section along the line segment A-A shown in (A), and (C) is an enlargement in cross section of the enclosed portion B shown in (B). Fig. 15 is a view in cross section showing a configuration in which a mouth seal gasket 9A and the shoulder seal gasket 9B are formed as a single piece.

As shown in fig. 1, the container 1 having a cap of this embodiment comprises: a container main body 2; and a cap unit 3 which is detachably fitted to the container main body 2. The container 1 having a cap is a tabletop flask (beverage container) which, by virtue of the container main body 2 having a vacuum-insulated structure, is capable of keeping a beverage (contents) housed in the container main body 2 warm or cold.

It should be noted that, in the container 1 having a cap of this embodiment, a side on which a spout 15 (to be described later) is provided will be treated as a "front side", and a side on which a handle portion 8b located on the opposite side to the spout 15 is provided will be treated as a "rear side".

As shown in fig. 1-3, the container main body 2 is constructed by means of a container having a double structure comprising a bottomed-cylindrical outer container 4 and inner container 5 made of stainless steel or the like, for example, with mouth portions thereof being bonded together in a state in which the inner container 5 is housed inside the outer container 4. Furthermore, a vacuum insulation layer 6 is provided between the outer container 4 and the inner container 5. The vacuum insulation layer 6 may be formed by closing off vent holes provided in the centre of a bottom face of the outer container 4, inside a chamber decompressed (evacuated) to a high vacuum.

The container main body 2 comprises: a substantially circular bottom portion 2a; a body portion 2b standing upright in a substantially cylindrical shape from an outer circumference of the bottom portion 2a; a substantially cylindrical narrowed-diameter neck portion 2c on an upper portion side of the body portion 2b; and a shoulder portion 2d which gradually narrows in diameter from the body portion 2b towards the neck portion 2c. Furthermore, an upper end portion of the neck portion 2c opens in a circular shape as an upper opening portion 2e of the container main body 2. Furthermore, an inner circumferential surface of the neck portion 2c has a narrower diameter than an inner circumferential surface of the body portion 2b. A ring-shaped protuberance 7 is further provided on the inner circumferential surface of the neck portion 2c, protruding around the whole circumference.

It should be noted that the container main body 2 of this embodiment is in the form of a pot, and has a substantially cylindrical external shape overall, with a narrower diameter on the upper portion side of the body portion 2b, but there is no particular limitation as to the external shape of the container main body 2, and appropriate modifications may be added to suit the size or design, etc. Furthermore, a coating or printing, etc. may also be applied to an outer circumferential surface of the container main body 2.

The container main body 2 has a structure in which a shoulder member 8 is attached to the neck portion 2c. The shoulder member 8 comprises a resin moulding such as polypropylene (PP), acrylonitrile-butadiene-styrene (ABS) or polyacetal (POM), for example, and is formed in a substantially cylindrical shape overall.

The shoulder member 8 is attached to the neck portion 2c of the container main body 2 by way of a mouth seal gasket 9A and a shoulder seal gasket 9B. The mouth seal gasket 9A and the shoulder seal gasket 9B are ring-shaped sealing members for forming a seal between the neck portion 2c and shoulder portion 2d of the container main body 2, and the shoulder member 8, and comprise heat-resistant elastic members such as rubber or an elastomer, for instance silicone rubber or the like.

The shoulder member 8 is fitted to the neck portion 2c of the container main body 2 so as to be flush with the outer circumferential surface of the body portion 2b of the container main body 2, in a state of covering the neck portion 2c, shoulder portion 2d and upper opening portion 2e of the container main body 2, by way of the mouth seal gasket 9A and the shoulder seal gasket 9B.

The mouth seal gasket 9A forms a seal between the neck portion 2c of the container main body 2 and the shoulder member 8 while covering an upper end portion of the neck portion 2c. Furthermore, an inner circumferential side of the mouth seal gasket 9A extends as far as the vicinity of a lower end of an inner circumferential side of the shoulder member 8. This prevents a beverage inside the container main body 2 from penetrating into a gap between the neck portion 2c of the container main body 2 and the shoulder member 8, and also prevents the beverage from leaking out therefrom.

Meanwhile, as shown in fig. 13(A)-(C), the shoulder seal gasket 9B forms a seal between the shoulder portion 2d of the container main body 2 and the shoulder member 8, while being at least positioned between the shoulder portion 2d and a surface (lower surface) of the shoulder member 8 facing the shoulder portion 2d. This prevents water and the like from penetrating from the outside into a gap between the shoulder portion 2d of the container main body 2 and the shoulder member 8 during washing, etc.

Furthermore, the shoulder member 8 comprises a mating recess 8a into which the shoulder seal gasket 9B is fitted on the surface (lower surface) facing the shoulder portion 2d. Meanwhile, the shoulder seal gasket 9B comprises one or more (four in this embodiment) elastic rib portions 9a protruding around the whole circumference from a surface (lower surface) facing the shoulder portion 2d and/or a surface (upper surface) facing the shoulder member 8 (the upper surface and the lower surface in this embodiment). The four elastic rib portions 9a are positioned on the inner circumferential side and outer circumferential side of the upper surface and the lower surface of the shoulder seal gasket 9B, and are provided so as to protrude in opposite directions from positions facing each other.

In a state in which the shoulder seal gasket 9B is interposed between the shoulder portion 2d and the shoulder member 8, the shoulder seal gasket 9B is in a state of tight contact with surfaces abutted by the elastic rib portions 9a, while the elastic rib portions 9a elastically deform. As a result, even if there is a dimensional error due to the moulding conditions of the container main body 2 and the shoulder member 8, the elastic rib portions 9a elastically deform in accordance with the difference in dimensions, thereby enabling a seal to be formed between the shoulder portion 2d and the shoulder member 8.

A handle portion 8b to be gripped by a user is provided on the rear side of the shoulder member 8. The handle portion 8b is provided so as to protrude towards the rear from the outer circumferential portion of the shoulder member 8 while also extending downwards. It should be noted that the handle portion 8b is not necessarily limited to the abovementioned configuration in which it is provided on the rear side of the container main body 2, and it is also possible to adopt a configuration in which the handle portion 8b is provided on the rear side of the cap unit 3.

As shown in fig. 1-9, the cap unit 3 of this embodiment comprises: a cap main body 10; a lid element 11 positioned on an upper portion side of the cap main body 10; and an inner plug 12 positioned on a lower portion side of the cap main body 10.

As shown in fig. 2-7, the cap main body 10 comprises a resin moulding such as PP, ABS or POM, for example, and has a substantially circular bottom wall portion 10a which is indented upwards, and a circumferential wall portion 10b extending upwards in a substantially cylindrical shape from the outer circumference of the bottom wall portion 10a.

The cap main body 10 is detachably fitted by screwing onto the shoulder member 8 (container main body 2). A female screw portion 13 is provided for this purpose on the inner circumferential surface of the shoulder member 8. Meanwhile, a male screw portion 14 which screws together with the female screw portion 13 is provided on the outer circumferential surface of the circumferential wall portion 10b (cap main body 10). The cap main body 10 is attached to the shoulder member 8 (container main body 2), whereby the upper opening portion 2e of the container main body 2 is closed.

It should be noted that the cap main body 10 is configured to be detachably fitted to the shoulder member 8, as described above, but in a configuration lacking the shoulder member 8, the cap main body 10 should be detachably fitted by screwing to the neck portion 2c of the container main body 2.

A flow path R communicating with the inner side of the container main body 2 is provided on the inner side of the cap main body 10. The cap main body 10 comprises: the spout 15 which protrudes towards the front from the upper end portion of the front side of the circumferential wall portion 10b; a pair of partition walls 16 protruding towards the rear from the inner circumferential surface on the front side of the circumferential wall portion 10b; a liquid passage port 17 provided as an opening in the bottom wall portion 10a between lower portion sides of the pair of partition walls 16; an air passage port 18 provided as an opening in the rear side of the bottom wall portion 10a; and a sleeve portion 19 provided in the centre of the bottom wall portion 10a.

The spout 15 is a part for pouring out the beverage inside the container main body 2, and it is formed by a groove portion protruding forwards while being inclined obliquely upwards. The pair of partition walls 16 are parts which divide a portion of the flow path R in a width direction between the spout 15 and the liquid passage port 17, the pair of partition walls 16 being provided so as to protrude parallel to each other along the area between the spout 15 and the liquid passage port 17. The liquid passage port 17 is a part allowing a flow of liquid with the inside of the container main body 2, and it is formed by a hole portion penetrating the front side of the bottom wall portion 10a. The air passage port 18 is a part allowing a flow of air with the inside of the container main body 2, and it is formed by a hole portion penetrating the rear side of the bottom wall portion 10a. The sleeve portion 19 is a part which axially supports a slide shaft 30 (to be described later) in such a way as to enable sliding in a vertical direction, the sleeve portion 19 comprising a shaft hole 19a penetrating the bottom wall portion 10a, and being provided so as to protrude upwards in a substantially cylindrical shape.

It should be noted that the spout 15 is configured to be provided at the upper end portion on the front side of the cap main body 10, but it may also be configured to be provided at the upper end portion on the front side of the shoulder member 8. In a configuration in which the spout 15 is provided on the shoulder member 8, a pair of upper wall portions 10d (to be described later) should be contiguous with a base end portion of the spout 15 provided on the shoulder member 8 when the cap unit 3 is fitted to the container main body 2.

An upper-side flange portion 10c protruding in an enlarged-diameter direction from the upper end portion of the circumferential wall portion 10b, and the pair of upper wall portions 10d protruding upwards from an upper surface of the upper-side flange portion 10c are provided on the upper portion of the cap main body 10.

The upper-side flange portion 10c forms a step portion 10e around the whole circumference together with the outer circumferential surface of the circumferential wall portion 10b. The pair of upper wall portions 10d are provided so as to protrude further to the rear side than the upper-side flange portion 10c while being contiguous with a base end portion of the spout 15 and in a state of enclosing the circumference of the upper end portion of the circumferential wall portion 10b.

A water seal gasket 20 is detachably fitted to a lower portion of the cap main body 10. The water seal gasket 20 is a ring-shaped sealing member for forming a seal between the inside of the container main body 2 and the cap main body 10, and it comprises a heat-resistant elastic member such as rubber or an elastomer, for instance silicone rubber or the like.

A lower-side circumferential wall 10f protruding downwards in a substantially cylindrical shape from the bottom wall portion 10a, and a lower-side flange portion 10g protruding from the outer circumferential surface of the lower-side circumferential wall 10f around the whole circumference in the enlarged-diameter direction are provided on the lower portion of the cap main body 10.

Meanwhile, a ring-shaped mating recess 20a is provided around the whole circumference on the inner circumferential surface of the water seal gasket 20. The water seal gasket 20 is detachably fitted to the outer circumferential portion of a lower end side of the cap main body 10 by being attached to the outer circumferential surface of the lower-side circumferential wall 10f in a state in which the lower-side flange portion 10g is mated with the mating recess 20a.

Furthermore, an elastic flange portion 20b protruding in the enlarged-diameter direction around the whole circumference is provided on the outer circumferential surface of the water seal gasket 20. The water seal gasket 20 is in a state of tight contact around the whole circumference with the protuberance 7 of the container main body 2, while the elastic flange portion 20b elastically deforms when the cap main body 10 is fitted to the container main body 2. As a result, a seal can be formed between the protuberance 7 (the inside of the container main body 2) and the cap main body 10.

Meanwhile, the water seal gasket 20 can be removed from the cap main body 10 by elastically deforming (stretching and extending) the water seal gasket 20 itself. This allows the cap main body 10 and the water seal gasket 20 to be washed separately, keeping the area between the cap main body 10 and the water seal gasket 20 hygienic.

It should be noted that the water seal gasket 20 is not necessarily limited to the shape described above; for example, the number of elastic flange portions 20b is not limited to one, and it is possible to provide a plurality of elastic flange portions 20b. Furthermore, appropriate modifications may also be added to the shape of the elastic flange portion(s) 20b.

As shown in fig. 2-6 and 8 and 10, the lid element 11 is fitted to the cap main body 10 so as to be vertically movable in relation thereto, and in a state of being biased upwards by means of a first coil spring 21 provided on the inside thereof.

Specifically, the lid element 11 comprises a lid member 22, a first holding member 23, and a cover member 24. The first coil spring 21 comprises a metal coil having excellent corrosion resistance, such as stainless steel, for example, serving as a first biasing member. The lid member 22, the first holding member 23, and the cover member 24 comprise resin mouldings such as PP, ABS or POM, for example.

The lid member 22 is formed with a substantially elliptical plate shape overall, so as to close off the upper portion of the circumferential wall portion 10b while being mated on the inside of the pair of upper wall portions 10d of the cap main body 10.

A flow path-forming portion 25 for forming part of the flow path R is formed on the front side of the lid member 22 (lid element 11). The flow path-forming portion 25 comprises: an upper wall 25a covering an area between upper sides of the pair of partition walls 16; a rear wall 25b covering an area between rear sides of the pair of partition walls 16; and a pair of side walls 25c covering outer surfaces of the pair of partition walls 16. The pair of partition walls 16, upper wall 25a, rear wall 25b, and pair of side walls 25c engage with each other so as to form the flow path R which is directed from the liquid passage port 17 towards the spout 15.

Furthermore, the lid member 22 is detachably fitted to the cap main body 10 by means of engagement of a pair of engaging grooves 16a formed on the outer surfaces of the pair of partition walls 16, and a pair of engaging protrusions 25d formed on the inner surfaces of the pair of side walls 25c.

The first holding member 23 comprises: a substantially circular top wall portion 23a; a circumferential wall portion 23b extending downwards in a substantially cylindrical shape from the outer circumference of the top wall portion 23a; and a plurality of (three in this embodiment) hole portions 23c penetrating the top wall portion 23a.

The first holding member 23 furthermore comprises a pair of guide protrusions 26, and a sleeve portion 27. The pair of guide protrusions 26 are provided so as to protrude outwards from opposing positions on the circumferential wall portion 23b.

The sleeve portion 27 is a part to which the slide shaft 30 (to be described later) is detachably fitted by screwing, the sleeve portion 27 comprising a shaft hole 27a that penetrates the centre of the top wall portion 23a, and being provided so as to protrude downwards in a substantially cylindrical shape. Furthermore, a pair of screw protrusions 27b are provided so as to protrude on the inner side of the sleeve portion 27 (inner circumferential surface of the shaft hole 27a).

Meanwhile, the lid member 22 is provided with: a housing recess 22a for housing the first coil spring 21; a shaft hole 22b penetrating the centre of the housing recess 22a; a pair of guide recesses 22c for guiding the pair of guide protrusions 26 so as to be slidable in the vertical direction; and a pair of abutment portions 22d abutted by the pair of guide protrusions 26 at an upper end portion of the pair of guide recesses 22c.

The first holding member 23 is attached to the lid member 22 by causing the pair of guide protrusions 26 to advance to the inside of the pair of guide recesses 22c while the first coil spring 21 is compressed between the housing recess 22a and the top wall portion 23a.

By this means, the first holding member 23 holds the first coil spring 21 in a compressed state together with the lid member 22. Furthermore, the first holding member 23 is slidable (movable) in the vertical direction while being biased upwards by means of the first coil spring 21. Furthermore, sliding (movement) of the first holding member 23 to above the lid member 22 is restricted as a result of the pair of guide protrusions 26 abutting the pair of abutment portions 22d.

The cover member 24 is formed with a substantially elliptical plate shape overall, so as to close off the upper portions of the lid member 22 and the first holding member 23 while being mated on the inside of the pair of upper wall portions 10d of the cap main body 10. Furthermore, an operating lever 24a protruding towards the rear is provided on the rear end portion of the cover member 24.

The cover member 24 is fitted so as to be pivotable (movable) in the vertical direction by way of a hinge portion 28 which is provided between the cover member 24 and the lid member 22. The hinge portion 28 comprises: a pair of engaging grooves 25e provided on the lid member 22 side; and a pair of support shafts 24b provided on the cover member 24 side.

The pair of engaging grooves 25e are positioned on the outer surface of the pair of side walls 25c, and are formed as cutouts extending obliquely downwards and to the rear from upper end portions of the pair of side walls 25c. The pair of support shafts 24b are provided so as to protrude from inner surfaces of a pair of arm portions 24c protruding downwards from the lower surface on the front side of the cover member 24.

The pair of support shafts 24b are positioned at the rear end portions of the pair of engaging grooves 25e while the pair of support shafts 24b are engaged in the pair of engaging grooves 25e, whereby the hinge portion 28 supports the cover member 24 so as to be pivotable in relation to the lid member 22. Furthermore, the cover member 24 is detachably fitted to the lid member 22 by means of the engagement of the pair of engaging grooves 25e and the pair of support shafts 24b that form the hinge portion 28.

Furthermore, the cover member 24 comprises: an elastic piece 24d protruding downwards from the lower surface at the rear side of the cover member 24; and a latching hook 24e protruding towards the front from a tip end portion of the elastic piece 24d. Meanwhile, a latching hole 22e is formed in the rear side of the lid member 22. Pivoting (movement) of the cover member 24 upwardly from the lid member 22 is restricted as a result of the latching hook 24e being latched in this latching hole 22e while the elastic piece 24d is inserted in the latching hole 22e.

As shown in fig. 2-6 and 9, the inner plug 12 is attached to the cap main body 10 so as to be movable in the vertical direction.

Specifically, the inner plug 12 comprises: a plug body 29, the slide shaft 30, a second coil spring 31, and a second holding member 32. The second coil spring 31 serves as a second biasing member and comprises a metal coil having excellent corrosion resistance, such as stainless steel, for example. The plug body 29, the slide shaft 30 and the second holding member 31 comprise resin mouldings such as PP, ABS or POM, for example.

The plug body 29 is formed substantially in a disc shape overall so as to close off the lower portion side of the cap main body 10. Furthermore, the plug body 29 has an upwardly indented shape. Furthermore, a pair of wall portions 29a to be gripped during attachment and detachment are provided so as to protrude downwards from opposing positions on an outer circumferential portion on the lower surface side of the plug body 29.

A sleeve portion 33 is provided in the centre of the plug body 29. The sleeve portion 33 is a part which axially supports the slide shaft 30 in such a way as to enable sliding in the vertical direction, the sleeve portion 33 comprising a centre hole 33a penetrating the plug body 29, and being provided so as to protrude upwards in a substantially cylindrical shape. Furthermore, the sleeve portion 33 is disposed on the inner side of the second coil spring 31.

The slide shaft 30 comprises a shaft portion 30a and a head portion 30b at a lower end portion of the shaft portion 30a, the slide shaft 30 being fitted so as to be slidable (movable) in the vertical direction in relation to the plug body 29, in a state in which the shaft portion 30a penetrates the centre hole 33a towards the upper side. Furthermore, sliding (movement) of the slide shaft 30 to above the plug body 29 is restricted as a result of the head portion 30b abutting the lower surface of the plug body 29.

The slide shaft 30 further comprises a plurality of (four in this embodiment) rib walls 30c protruding from the circumference on the base end side of the shaft portion 30a. Meanwhile, a plurality of (four in this embodiment) guide grooves 33b engaged by the plurality of rib walls 30c are provided on the inner side of the sleeve portion 33 (the inner circumferential surface of the centre hole 33a). By this means, the inner plug 12 restricts axial rotation of the plug body 29 in relation to the shaft portion 30a (slide shaft 30).

Furthermore, a pair of screw grooves 30d into which the pair of screw protrusions 27b are screwed, and a pair of latching grooves 30e into which the pair of screw protrusions 27b are latched are provided on the outer circumferential surface of the shaft portion 30a. The pair of screw grooves 30d are formed as helical cutouts extending downwards from the upper end side of the shaft portion 30a. The pair of latching grooves 30e are formed as upward cutouts contiguously with lower end portions of each of the screw grooves 30e.

A shaft portion seal gasket 34 is detachably fitted to the shaft portion 30a. The shaft portion seal gasket 34 is a ring-shaped sealing member for forming a seal between the shaft portion 30a (slide shaft 30), which penetrates the shaft hole 19a in the sleeve portion 19, and the shaft hole 19a (cap main body 10), and comprises a heat-resistant elastic member such as rubber or elastomer, for instance silicone rubber or the like.

The shaft portion seal gasket 34 is mated in a ring-shaped mating recess 30f provided on the outer circumferential surface of the shaft portion 30a. Furthermore, an elastic flange portion 34a which makes tight contact with the whole circumference of the shaft hole 19a is provided so as to protrude in the enlarged-diameter direction on the outer circumferential surface of the shaft portion seal gasket 34.

A head portion seal gasket 35 is detachably fitted to the head portion 30b. The head portion seal gasket 35 is a ring-shaped sealing member for forming a seal between the head portion 30b (slide shaft 30), which abuts the circumference of the centre hole 33a in the sleeve portion 33, and the centre hole 33a (plug body 29), and comprises a heat-resistant elastic member such as rubber or elastomer, for instance silicone rubber or the like. The head portion seal gasket 35 covers the outer circumferential portion of the head portion 30b.

The second holding member 32 comprises: a substantially circular top wall portion 32a; a circumferential wall portion 32b extending downwards in a substantially cylindrical shape from the outer circumference of the top wall portion 32a; and a slide hole 32c penetrating the centre of the top wall portion 32a.

The second holding member 32 is fitted to the slide shaft 30 by causing the shaft portion 30a to penetrate the slide hole 32c, while the second coil spring 31 is compressed between the plug body 29 and the top wall portion 32a.

Furthermore, upward sliding (movement) of the second holding member 32 in relation to the slide shaft 30 is restricted as a result of abutment with an abutment portion 30g provided between upper end portions of the plurality of rib walls 30c.

As a result, the second holding member 32, together with the plug body 29, holds the second coil spring 31 in a compressed state. Furthermore, the second holding member 32 is slidable (movable) in the vertical direction while being biased upwards by means of the second coil spring 31. Furthermore, the second coil spring 31 biases the plug body 29 downwards in relation to the slide shaft 30.

A plurality of (four in this embodiment) guide grooves 32d engaged by the plurality of rib walls 30c are further provided on the inner circumferential surface of the slide hole 32c. By this means, the inner plug 12 restricts axial rotation of the second holding member 32 in relation to the shaft portion 30a (slide shaft 30).

As shown in fig. 2, 3, 6 and 10, in the cap unit 3 of this embodiment, the slide shaft 30 on the inner plug 12 side is detachably fitted by screwing to the first holding member 23 on the lid element 11 side.

Specifically, the slide shaft 30 (inner plug 12) is detachably fitted by screwing to the first holding member 23 (lid element 11) in a state in which the tip end portion of the shaft portion 30a of the slide shaft 30 protrudes above the first holding member 23, while the shaft portion 30a penetrates the shaft holes 19a, 22b, 27a provided in the cap main body 10, lid member 22, and first holding member 23, respectively.

The inner plug 12 can be attached to the first holding member 23 (lid element 11) by screwing the pair of screw protrusions 27b into the pair of screw grooves 30d while rotating the slide shaft 30 as one with the plug body 29 about an axis in one direction (to the right in this embodiment), and then latching the pair of screw protrusions 27b in the pair of latching grooves 30e.

By this means, in the cap unit 3 of this embodiment, the lid element 11 and the inner plug 12 can be attached to the cap main body 10. Furthermore, in the cap unit 3 of this embodiment, the plug body 29 (inner plug 12) closes off the lower portion side of the cap main body 10 as a result of the plug body 29 being in tight contact with the water seal gasket 20 around the whole circumference.

Meanwhile, the inner plug 12 can be detached from the first holding member 23 (lid element 11) by rotating the slide shaft 30 as one with the plug body 29 about an axis in the opposite direction (to the left in this embodiment) to the abovementioned direction. As a result, in the cap unit 3 of this embodiment, the lid element 11 and the inner plug 12 can be detached and disassembled from the cap main body 10.

Furthermore, as shown in fig. 11 and 12, the cap unit 3 of this embodiment comprises a stopper mechanism 36 for restricting axial rotation of the plug body 29 (inner plug 12) in relation to the cap main body 10, in a state in which the plug body 29 (inner plug 12) has closed off the lower portion side of the cap main body 10.

The stopper mechanism 36 comprises: one or more (two in this embodiment) latching portions 36a provided on a surface (upper surface) of the plug body 29 facing the cap body 10; and one or more (two in this embodiment) latched portions 36b provided on a surface (lower surface) of the cap main body 10 facing the plug body 29.

The latching portions 36a are formed by wall portions protruding from the upper surface side of the plug body 29. The latching portions 36a extend in a radial direction of the plug body 29, and are provided while protruding so that upper ends thereof are at the same radial height in relation to the inclined upper surface of the plug body 29. Furthermore, the latching portions 36a are provided at symmetrical positions about the centre hole 33a in the plug body 29.

The latched portions 36b are constituted by groove portions formed by cutting away parts of the lower-side circumferential wall 10f. One end (the left-hand end) of the latched portions 36b in one direction is formed by a vertical surface, and the other end (the right-hand end) is formed by an inclined surface. Furthermore, the latched portions 36b are provided at symmetrical positions about the shaft hole 19a in the cap main body 10.

The stopper mechanism 36 restricts axial rotation of the plug body 29 (inner plug 12) in relation to the cap main body 10 as a result of the latching portions (wall portions) 36a being latched in the latched portions (groove portions) 36b, in a state in which the plug body 29 (inner plug 12) has closed off the lower portion side of the cap main body 10.

This makes it possible to prevent axial rotation of the plug body 29 (inner plug 12), which would thereby release the screwing of the slide shaft 30 (inner plug 12) in relation to the first holding member 23 (lid element 11), when the cap unit 3 is detached while being axially rotated in relation to the container main body 2.

Meanwhile, the state of the stopper mechanism 36 in which the latching portions (wall portions) 36a are latched in the latched portions (groove portions) 36b is released in a state in which the plug body 29 (inner plug 12) has opened the lower portion side of the cap main body 10.

Furthermore, when the plug body 29 (inner plug 12) is axially rotated in relation to the cap main body 10, the plug body 29 moves away from the water seal gasket 20 while the latching portions (wall portions) 36a of the stopper mechanism 36 make sliding contact with the lower end portion of the lower-side circumferential wall lOf. This makes it easier for the plug body 29 (inner plug 12) to axially rotate in relation to the cap main body 10, without the plug body 29 (inner plug 12) contacting the water seal gasket 20.

It should be noted that the stopper mechanism 36 is not limited to a case in which the latching portions 36a are formed by the wall portions and the latched portions 36b are formed by the groove portions, provided that the configuration allows the latching portions 36a to be latched in the latched portions 36b, and the configurations of the latching portions 36a and the latched portions 36b may be modified, as appropriate.

In the cap unit 3 of this embodiment having the configuration described above, the plug body 29 (inner plug 12) closes off the lower portion side of the cap main body 10, whereby the flow path R is in a closed state. From this state, the operating lever 24a is subjected to a downward pressing operation by means of the thumb, etc. while the handle portion 8b is gripped in one hand.

Here, from a state in which the tip end portion of the slide shaft 30 has abutted the cover member 24, the cover member 24 (lid element 11) pivots (moves) downwards against the biasing of the first coil spring 21, whereby the slide shaft 30 (inner plug 12) slides (moves) downwards. As a result, the plug body 29 (inner plug 12) opens the lower portion side of the cap main body 10, and the flow path R is in an open state.

Furthermore, when the plug body 29 (inner plug 12) is subjected to pressure inside the container main body 2, the slide shaft 30 (inner plug 12) slides (moves) downwards, whereby the head portion 30b opens the lower portion side of the centre hole 33a against the biasing of the second coil spring 31, and air flows into the container main body 2 through the air passage port 18.

In the cap unit 3 of this embodiment, the container main body 2 is tilted forwards from the state above, and the beverage housed inside the container main body 2 can be poured out from the spout 15 through the open flow path R.

Meanwhile, in the cap unit 3 of this embodiment, by releasing the abovementioned pressing operation on the operating lever 24a, the cover member 24 (lid element 11) which was being biased by the coil spring 21 pivots (moves) upwards. Furthermore, the slide shaft 30 (inner plug 12) which was being biased by the first coil spring 21 slides (moves) upwards. As a result, the plug body 29 (inner plug 12) closes the lower side portion of the cap main body 10, and the flow path R is in a closed state.

Furthermore, the head portion 30b which was being biased by the second coil spring 31 closes the lower portion side of the centre hole 33a as a result of the slide shaft 30 (inner plug 12) sliding (moving) upwards.

In the cap unit 3 of this embodiment, the shoulder seal gasket 9B forms a seal between the shoulder portion 2d of the container main body 2 and the shoulder member 8. This makes it possible to prevent water and the like from penetrating from the outside into the gap between the shoulder portion 2d of the container main body 2 and the shoulder member 8 during washing, etc., keeping the area between the shoulder portion 2d of the container main body 2 and the shoulder member 8 hygienic.

Furthermore, in the cap unit 3 of this embodiment, the flow path-forming portion 25 for forming part of the flow path R is provided in the lid member 22 (lid element 11). This makes it possible to prevent the beverage inside the flow path R from flowing into the lid element 11 (specifically, between the lid member 22 and the cover member 24), and can furthermore keep the flow path R hygienic.

Furthermore, in the cap unit 3 according to this embodiment, the inner plug 12 is detachable from the lid element 11 in a state in which the inner plug 12 has opened the flow path R. Specifically, in a state in which the plug body 29 (inner plug 12) has opened the lower portion side of the cap main body 10, the slide shaft 30 on the inner plug 12 side can be detached by screwing from the first holding member 23 on the lid element 11 side.

As a result, in the cap unit 3 of this embodiment, the lid element 11 and the inner plug 12 can be removed from the cap main body 10 in a state in which the plug body 29 (inner plug 12) has opened the lower portion side of the cap main body 10, and the cap unit 3 can be easily disassembled.

Accordingly, in the cap unit 3, the flow path R can be easily washed while the cap main body 10, the lid element 11 and the inner plug 12 are disassembled. Furthermore, the above members can be separately washed in the disassembled state, so the areas between the cap main body 10, the lid element 11 and the inner plug 12 can be kept hygienic.

It is thus possible to simplify the structure of the cap unit 3 of this embodiment, and the ease of cleaning can also be improved. Accordingly, even better usability of the container 1 having a cap of this embodiment can be envisaged by virtue of comprising the cap unit 3 such as described above.

It should be noted that the present invention is not necessarily limited to the embodiment described above, and various modifications may be added within a scope that does not depart from the essential point of the present invention.

For example, the shoulder seal gasket 9B is not necessarily limited to the abovementioned configuration such as shown in fig. 13(A)-(C), and it is also possible to employ a configuration such as shown in fig. 14(A)-(C).

Specifically, in the configuration shown in fig. 14(A)-(C), the upper surface of the shoulder seal gasket 9B is flattened to match the shape of the mating recess 8a, while two elastic rib portions 9a are provided protruding downwards from positions at the inner circumferential end and outer circumferential end of the lower surface of the shoulder seal gasket 9B.

In the case of this configuration also, water and the like can be prevented from penetrating from the outside into the gap between the shoulder portion 2d of the container main body 2 and the shoulder member 8 during washing, etc., keeping the area between the shoulder portion 2d of the container main body 2 and the shoulder member 8 hygienic.

Furthermore, the mouth seal gasket 9A and the shoulder seal gasket 9B are constructed as separate elements above, but the mouth seal gasket 9A and the shoulder seal gasket 9B may equally be constructed as a single element, as shown in fig. 15.

It should be noted that the abovementioned embodiment describes an example of the container 1 having a cap being applied to a tabletop flask, but the present invention may be broadly applied to beverage containers in which a gap is formed between the shoulder portion of a container main body and a shoulder member.

Specifically, the abovementioned embodiment has a configuration in which the shoulder member 8 is mated with the neck portion 2c of the container main body 2, but by using the abovementioned shoulder seal gasket 9B in a configuration in which part of the cap main body 10, serving as the shoulder member, is mated with the neck portion 2c of the container main body 2, it is possible to prevent water and the like from penetrating from the outside into the gap between the shoulder portion 2d of the container main body 2 and the cap main body 10 during washing, etc.

Furthermore, the abovementioned embodiment describes an example of the container 1 having a cap which, by virtue of the container main body 2 having a vacuum-insulated structure, has a heat-retention or cold-retention function, but the present invention may be applied to containers having a cap (beverage containers), comprising a container main body that does not have a vacuum-insulated structure.

### [Key to Symbols]

- 1: Container having a cap (beverage container)
- 2: Container main body
- 3: Cap unit
- 8: Shoulder member
- 8a: Mating recess
- 8b: Handle portion
- 9A: Mouth seal gasket
- 9B: Shoulder seal gasket
- 9a: Elastic rib portion
- 10: Cap main body
- 11: Lid element
- 12: Inner plug
- 15: Spout
- 16: Partition wall
- 17: Liquid passage port
- 21: First coil spring (first biasing member)
- 22: Lid member
- 23: First holding member
- 24: Cover member
- 24a: Operating lever
- 25: Flow path-forming portion
- 25a: Upper wall
- 25b: Real wall
- 28: Hinge portion
- 29: Plug body
- 30: Slide shaft
- 31: Second coil spring (second biasing member)
- 32: Second holding member
- 36: Stopper mechanism
- 36a: Latching portion
- 36b: Latched portion
- R: Flow path

## Claims

1. A beverage container for internally housing a beverage, the beverage container comprising:
a container main body having an open upper portion;
a shoulder member fitted to a neck portion having a narrower diameter than a body portion, on an upper portion side of the container main body; and
a shoulder seal gasket interposed between the container main body and the shoulder member,
**characterized in that** the shoulder seal gasket is at least positioned between a shoulder portion which gradually narrows in diameter from the body portion of the container main body towards the neck portion, and a surface of the shoulder member facing the shoulder portion.

2. A beverage container according to claim 1, **characterized in that**:
the shoulder member comprises a mating recess into which the shoulder seal gasket is fitted on the surface facing the shoulder portion.

3. A beverage container according to claim 1 or 2, **characterized in that**:
the shoulder seal gasket comprises an elastic rib portion protruding around the whole circumference from a surface facing the shoulder portion and/or a surface facing the shoulder member; and
in a state in which the shoulder seal gasket is interposed between the shoulder portion and the shoulder member, the shoulder seal gasket is in a state of tight contact with a surface abutted by the elastic rib portion, while the elastic rib portion elastically deforms.

4. A beverage container according to any one of claims 1 to 3, **characterized in that**:
a mouth seal gasket for forming a seal between the container main body and the shoulder member is provided in a state of covering an upper end portion of the neck portion.

5. A beverage container according to claim 4, **characterized in that**:
the mouth seal gasket and the shoulder seal gasket are formed as a single piece.

6. A beverage container according to any one of claims 1 to 5, **characterized by** comprising:
a cap unit for closing off an upper opening portion of the container main body.

7. A beverage container according to any one of claims 1 to 6, **characterized in that**:
the container main body has a vacuum-insulated structure.
